(19) Europäisches Patentamt
European Patent Office
Office européen des brevets

(11) **EP 2 881 602 A1**

(12) **EUROPEAN PATENT APPLICATION**
published in accordance with Art. 153(4) EPC

(43) Date of publication:
**10.06.2015 Bulletin 2015/24**

(51) Int Cl.:
**F16C 11/06** (2006.01)

(21) Application number: **13825733.2**

(22) Date of filing: **30.05.2013**

(86) International application number:
**PCT/JP2013/065003**

(87) International publication number:
**WO 2014/020980 (06.02.2014 Gazette 2014/06)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **30.07.2012 JP 2012168163**

(71) Applicant: **THK Rhythm Co., Ltd.**
**Hamamatsu-shi, Shizuoka 430-0831 (JP)**

(72) Inventor: **TOSHIHRO, Shimada**
**Hamamatsu-shi Shizuoka 4300831 (JP)**

(74) Representative: **Körber, Martin Hans**
**Mitscherlich PartmbB**
**Patent- und Rechtsanwälte**
**Sonnenstrasse 33**
**80331 München (DE)**

(54) **BALL JOINT**

(57)     To provide a ball joint that exerts a superior sealing property, while maintaining an appropriate assembled state of a dust cover relative to a ball stud even when a film unit of the dust cover is strongly pulled. In a ball joint 10 provided with a ball stud 12 having a ball-head unit 16 formed on a lower end of a stud unit 14, a socket 32 that houses the ball-head unit 16 so as to be pivotable therein, and has an opening unit 34 from which the stud unit 14 protrudes, formed on an upper end thereof, and a dust cover 36 having elasticity, which is provided with a small diameter opening unit 40 to be attached to the stud unit 14, and in this structure, the ball stud 12 has a flange unit 20 formed on the stud unit 14, and the dust cover 36 further has a guide unit 44 formed on the inner peripheral portion 42 of the small diameter opening unit 40, which is fitted to the outer peripheral portion 26 of the stud unit 14, with a fine gap being placed in a radial direction, an engaging unit 54 formed on a lower end portion 52 of the small diameter opening unit 40, which is made in contact with an upper surface of the flange unit 20 in the axial direction, and engaged therewith, and a reinforcing ring 56 that couples the guide unit 44 and the engaging unit 54 with high rigidity.

FIG. 3

## Description

Technical Field

The present invention relates to a ball joint mainly used as a coupling device of a vehicle-use link mechanism, and in particular to such a ball joint as not to cause degradation in sealing property of a dust cover.

Background Art

Conventionally, as a dust cover for a ball joint to be used for a suspension mechanism and a steering mechanism for a vehicle, for example, such a dust cover described in Patent Document 1 has been known. This dust cover is made of a rubber-state elastic member, and constituted by a small diameter opening unit to be fitted to an outer peripheral surface of a ball stud, a large diameter opening unit to be fitted to an outer peripheral surface of a socket and a film unit that connects the gap between these surfaces, and a reinforcing ring is buried in the small diameter opening unit.

A flange unit having a dimension free of play in the radial direction relative to the outer peripheral surface of the ball stud is installed on an inner peripheral side of a reinforcing ring main body, and above the flange unit of the reinforcing ring, that is, on the inner peripheral surface on the opening end side of the small diameter opening unit, a sealing unit made of a rubber-state elastic member, which is tightly made in contact with the outer peripheral surface of the ball stud, is formed.

Prior Art Document

Patent Document

Patent Document 1: JP-A No. 2009-14064

Disclosure of Invention

However, since the elastic member such as rubber is hardened under a low temperature environment, in the case when the ball stud shakes under the low temperature environment, on the side where the distance between the large diameter opening unit and the small diameter opening unit becomes longer, that is, on the side where a tension is exerted so that the film unit of the dust cover is extended, the small diameter opening unit of the dust cover is pulled in the socket side direction by a force greater than that in the case of a normal temperature environment due to the hardened film unit.

Consequently, in the case of the conventional dust cover for a ball joint of this type, the tension from the film unit is exerted on one portion on the circumference of the small diameter opening unit, and when the small diameter opening unit is tilted relative to the outer peripheral surface of the ball stud, the sealing unit, which is located above the flange unit of the reinforcing ring that serves as only the portion for regulating the tilt, has its side to which the tension is exerted greatly dislocated in a direction departing from the outer peripheral surface of the ball stud, with the result that the tightly contact state of the sealing unit is no longer maintained.

Moreover, when the tension from the film unit is further increased, the inner peripheral surface of the flange unit of the reinforcing ring that is set to be free of play relative to the outer peripheral surface of the ball stud is wrenched to adhere to the ball stud, with the result that when the ball stud is activated to rotate (slide) around its center axis, the small diameter opening unit is also undesirably rotated together with the ball stud to cause the film unit to be excessively twisted and damaged in the worst case.

Therefore, in the structure of the dust cover for a ball joint described in Patent Document 1, a problem arises in which in all the environments where the ball joint is used, a good sealing property of the dust cover is not exerted.

The object of the present invention is to provide a ball joint that can maintain a good sealing property even when the small diameter opening unit of the dust cover is pulled by the film unit.

In order to achieve the object, the present invention is provided with the following structure. First, the present invention is directed to a ball joint that is provided with a ball stud having a ball-head unit on the lower end of a stud unit, a socket that houses the ball-head unit in a manner so as to pivotable therein, with an opening unit from which the stud unit protrudes being formed on the upper end, and a dust cover that is provided with a small diameter opening unit to be attached to the stud unit and a large diameter opening unit to be attached to the socket, and has an elastic property.

This ball joint is characterized in that the ball stud is provided with a flange unit attached to the stud unit, and in that the dust cover is provided with a guide unit that is formed on an inner peripheral portion of the small diameter opening unit, and fitted to the outer peripheral portion of the stud unit, with a fine gap being placed in the radial direction therebetween, an engaging unit that is formed on the lower end unit of the small diameter opening unit, and is made in contact with the upper surface of the flange unit in the axial direction and engaged therewith, and a reinforcing ring that couples the guide unit and the engaging unit with each other with high rigidity.

In this case, the dust cover is provided with a sealing unit that is installed below the guide unit on the inner peripheral portion of the small diameter opening unit, and made in tightly contact with the outer peripheral portion of the stud unit, with a tightening margin being placed in the radial direction.

Moreover, the dust cover has a difference between the outer radius of the stud unit and the inner radius of the sealing unit in the unattached state as a tightening margin, and a difference between the outer radius of the stud unit and the inner radius of the guide unit as a fine gap, and the tightening margin is made wider than the fine gap.

Furthermore, the dust cover may be provided with an inner peripheral protruding unit that protrudes inward from the inner peripheral surface of the guide unit and is formed above the guide unit on the inner peripheral portion of the small diameter opening unit.

The reinforcing ring has a tube-shaped unit with its lower end in the axial direction being made face to face with the engaging unit, a flange unit that is formed inside the upper end of the tube-shaped unit with its inner peripheral surface being made face to face with the guide unit, and a communication groove formed longitudinally on the inner peripheral surface of the flange unit.

In accordance with the present invention, by allowing the two portions of the guide unit and the engaging unit coupled with each other with the reinforcing ring serving as a highly rigid member to regulate the position in the radial direction and the position in the axial direction of the small diameter opening unit relative to the stud unit, it is possible to suppress the small diameter opening unit from tilting even when the small diameter opening unit is pulled by the film unit so that the tightly contact state of the sealing unit can be maintained, and since the fine gap is prepared between the outer peripheral portion of the stud unit and the guide unit, the guide unit is prevented from being wrenched; thus, it is possible to provide a ball joint that can maintain a good sealing property of the dust cover.

Moreover, since the guide unit is installed above the sealing unit, the distance between both of the position regulating units of the guide unit and the engaging unit is set to be longer so that the tilt of the small diameter opening unit relative to the fine gap between the stud unit and the guide unit is suppressed to be smaller, thereby making it possible to maintain a good sealing property of the dust cover.

Furthermore, by setting the tightening margin of the sealing unit to be larger than the amount of the gap in the radial direction (fine gap) of the guide unit, it becomes possible to maintain the state of the sealing unit provided with the tightening margin, even in the case when the small diameter opening unit is tilted so that one portion of the inner peripheral surface of the guide unit is made in contact with the outer peripheral portion of the stud unit, and consequently to maintain a good sealing property of the dust cover even in the case when the small diameter opening unit is tilted to the maximum level.

By installing the inner peripheral protruding unit having an elastic property, it is possible to increase a force resisting the small diameter opening unit from being tilted, while maintaining the freely sliding property of the small diameter opening unit relative to the stud unit, and even when the force by which the small diameter opening unit is pulled by the film unit is the same, the tilt angle of the small diameter opening unit can be suppressed to a smaller angle so that the sealing endurance of the dust cover can be improved.

Moreover, by forming the groove on the inner peripheral surface that is made face to face with the guide unit of the reinforcing ring, it becomes possible to maintain a flowing path for use in filling an elastic material such as rubber around the reinforcing ring, upon molding the dust cover with the reinforcing ring being inserted, and also to make the inner peripheral surface of the reinforcing ring closer to the inner peripheral surface of the guide unit; thus, even in the case when a thin film of an elastic member, such as rubber, is required to be placed between the inner peripheral surface of the guide unit and the inner peripheral surface of the reinforcing ring due to conditions or the like of the moldability of the dust cover, the rigidity of the guide unit is enhanced so that a good sealing property of the dust cover can be ensured.

Brief Description of the Drawings

FIG. 1 is an explanatory view showing a configuration of a first embodiment of a ball joint in accordance with the present invention.
FIGS. 2A and 2B are explanatory views showing a dust cover and a ball stud of FIG. 1 in a separated manner.
FIG. 3 is a cross-sectional view showing a small diameter opening unit of the dust cover of the first embodiment in an enlarged manner.
FIGS. 4A and 4B are explanatory views showing a reinforcing ring of FIG. 3 in detail.
FIG. 5A and 5B are explanatory views showing a relationship between a fine gap and a tightening margin of the small diameter opening unit of the first embodiment.
FIG. 6 is an explanatory view showing a configuration of a second embodiment of a ball joint in accordance with the present invention.
FIGS. 7A, 7B and 7C are explanatory views showing a dust cover, a retainer and a ball stud of FIG. 6 in a separated manner.
FIG. 8 is a cross-sectional view showing a small diameter opening unit of the dust cover of the second embodiment in an enlarged manner.
FIGS. 9A and 9B are explanatory views showing a reinforcing ring of FIG. 8 in detail.
FIG. 10A and 10B are explanatory views showing a relationship between a fine gap and a tightening margin of the small diameter opening unit of the second embodiment.
FIG. 11 is a cross-sectional view showing a small diameter opening unit of a dust cover of a third embodiment in an enlarged manner.
FIG. 12A and 12B are explanatory views showing the reinforcing ring of FIG. 11 in detail.
FIG. 13 is a cross-sectional view showing a small diameter opening unit of a dust cover of a fourth embodiment in an enlarged manner.
FIG. 14A and 14B are explanatory views showing the reinforcing ring of FIG. 13 in detail.
FIG. 15 is a cross-sectional view showing a small diameter opening unit of a dust cover of a fifth embodiment.

Best Mode for Carrying Out the Invention

The following description will discuss first to fifth embodiments of a ball joint in accordance with the present invention, with reference to FIGS. showing configurations and the like thereof. Additionally, expressions, such as "upper end" and "lower end", "upper surface" and "lower surface" as well as "upper side" and "lower side", used in the present application, represent directions (upper/lower relationship) in the illustrated state, and in the case when the ball joint of the present invention is disposed upside down or in a horizontally laid-out state, these expressions relating to directions are made to correspond to the laid-out directions.

[First Embodiment]

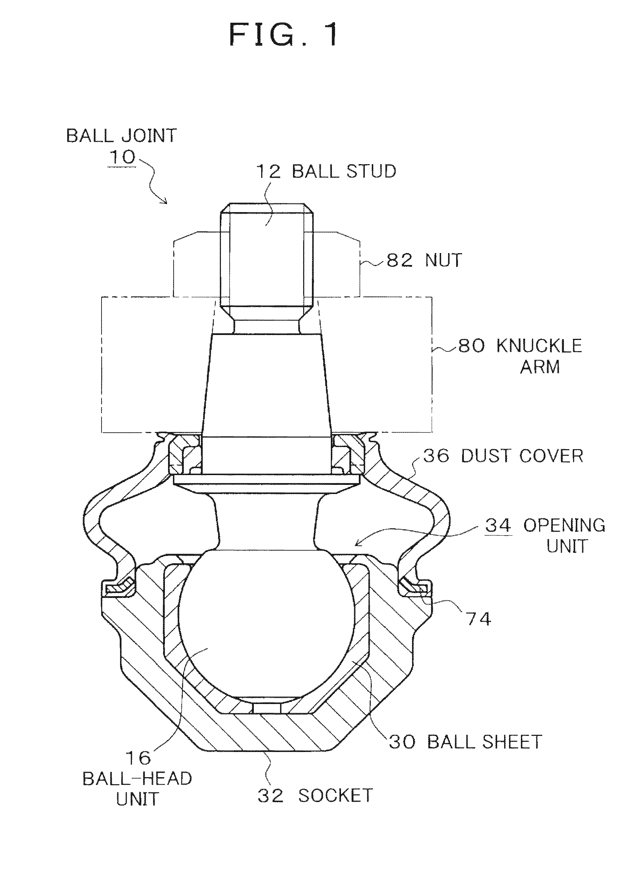

FIG. 1 is an explanatory view showing a configuration of a ball joint of a first embodiment in accordance with the present invention. In FIG. 1, a ball joint 10 is constituted by a ball stud 12, a ball sheet 30, a socket 32 and a dust cover 36, and is assembled onto a knuckle arm 80 serving as an assembling target by a nut 82.

The ball joint 10 is designed such that a ball-head unit 16 formed on the lower end of the ball stud 12 is assembled into the socket 32 with the ball sheet 30 interposed therebetween, and the opening unit 34 of the socket 32 is molded so as to be caulked so that the ball stud 12 is supported so as to freely rock and slide therein. Moreover, between the ball stud 12 and the socket 32, the dust cover 36 for use in preventing water and dusts from entering the inside thereof through the opening unit 34 is attached.

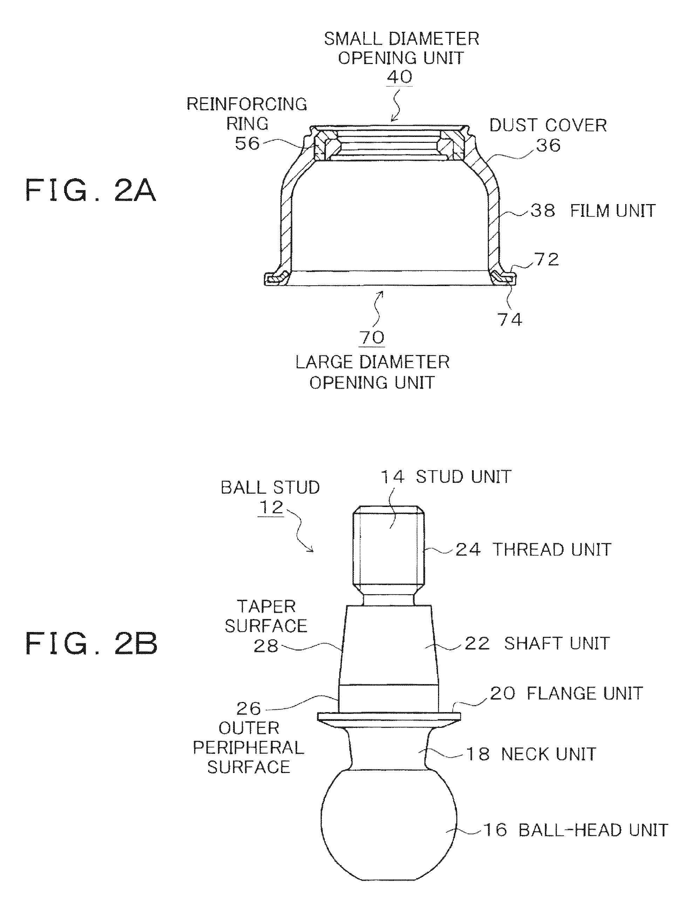

FIGS. 2A and 2B are explanatory views showing the dust cover 36 and the ball stud 12 respectively in a separated manner, FIG. 2A is a cross-sectional view of the dust cover 36, and FIG. 2B shows the ball stud 12.

In FIG. 2A, the dust cover 36 formed by an elastic material, such as rubber, is provided with a small diameter opening unit 40 formed on the upper end of the film unit 38 and a large diameter opening unit 70 formed on the lower end thereof, and a reinforcing ring 56, which is formed by a resin, metal and the like, is embedded into the small diameter opening unit 40, and into the large diameter opening unit 70, a peripheral edge unit 72 having a press-in ring 74 made of metal being embedded therein, is formed.

In FIG. 2B, the ball stud 12 is designed such that the ball-head unit 16 is formed on the lower end of the stud unit 14 and on the stud unit 14, a neck unit 18, a flange unit 20, a shaft unit 22 and a thread unit 24 are formed in succession from the ball-head unit 16 side. Moreover, on the shaft unit 22, an outer peripheral surface 26 is formed on the flange unit 20 side and a taper surface 28 is formed on the thread unit 24 side.

In the present embodiment, the press-in ring 74 is embedded into the large diameter opening unit 70, and as shown in FIG. 1, the dust cover 36 is secured onto the socket 32, with its rigidity being maintained by the press-in ring 74; however, as the attaching mode of the dust cover 36 onto the socket 32 side, another mode may be used.

Moreover, the film unit 38 of the dust cover 36 has a bell shape in its unattached state; however, another shape, such as, for example, a bellow shape, may be used.

Furthermore, the attaching method of the dust cover 36 onto the ball stud 12 side is carried out in the following manner: the dust cover 36 secured onto the socket 32 is assembled onto the knuckle arm 80 together with the ball stud 12, and the thread unit 24 is tightened by the nut 82 so that the taper surface 28 is brought into a press-in state and the ball stud 12 is secured; thus, the inner peripheral portion of the small diameter opening unit 40 is fitted to the outer peripheral surface 26 of the shaft unit 22, with the small diameter opening unit 40 being pressed by the flange unit 20 and the knuckle arm 80 in the shaft direction; however, any other securing method may be used as long as the same configuration is formed.

In this case, the thread unit 24 is secured onto the knuckle arm 80 serving as an assembling target component by the nut 82; however, the assembling target of the ball joint 10 is desirably determined. Moreover, the shape of the film unit 38 is not particularly limited by the shape shown in FIG. 2A, and another shape may be used.

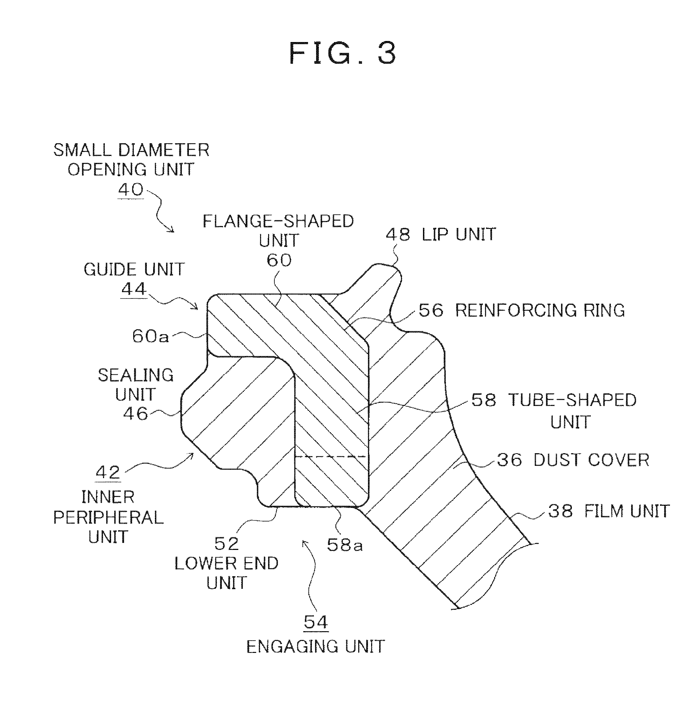

FIG. 3 is a cross-sectional view showing the small diameter opening unit 40 of the dust cover 36 of the first embodiment in an enlarged manner, which corresponds to the portion on the right side of the small diameter opening unit 40 in FIG. 2A that is drawn out and shown. In FIG. 3, the small diameter opening unit 40 has a structure in which a guide unit 44 and a sealing unit 46 are formed on the inner peripheral portion 42 side, and a lip unit 48 is formed on the upper end side, with an engaging unit 54 being formed on a lower end unit 52 side, and the reinforcing ring 56 is embedded therein.

A tube-shaped unit 58 and a flange-shaped unit 60 are formed on the reinforcing ring 56, and in the present embodiment, the inner peripheral surface 60a of the flange unit 60 and the lower end surface 58a of the tube-shaped unit 58 are exposed from an elastic material, such as rubber, that forms the dust cover 36 so that the inner peripheral surface 60a forms the guide unit 44 and the lower end surface 58a forms the engaging unit 54.

The guide unit 44 is fitted to the outer peripheral surface 26 of the shaft unit 22, with a fine gap being formed in the radial direction, and the engaging unit 54 is made in contact with the upper surface of the flange unit 20 of the stud unit 14 in the axial direction and engaged therewith. The sealing unit 46 is made tightly in contact with the outer peripheral surface 26 of the shaft unit 22 by a tightening margin in the radial direction so that the sealing property of the small diameter opening unit 40 is maintained. Moreover, the lip unit 48 is made tightly in contact with the lower surface of the knuckle arm 80 by elasticity so that the sealing property of the small diameter opening unit 40 is reinforced.

Additionally, in the present embodiment, the lip unit 48 is formed; however, in some cases, the lip unit 48 is not necessarily formed depending on the condition or the like of the component shape of the assembling target.

In this manner, the position in the radial direction and the position in the axial direction of the small diameter opening unit 40 relative to the stud unit 14 are regulated by the two portions of the guide unit 44 and the engaging unit 54 that are coupled to each other by the reinforcing ring 56 of a highly rigid member so that even when the small diameter opening unit 40 is pulled by the film unit 38, the tilt of the small diameter opening unit 40 can be suppressed; thus, the tightly contact state of the sealing unit 46 can be maintained, and since the fine gap is prepared between the outer peripheral surface 26 of the shaft unit 22 and the guide unit 44, the guide unit 44 is prevented from being wrenched.

Moreover, by forming the sealing unit 46 at a position (between the guide unit 44 and the engaging unit 54) lower than the guide unit 44, the distance between the two position regulating units, that is, the guide unit 44 and the engaging unit 54, can be made longer; therefore, the tilt of the small diameter opening unit 40 relative to the fine gap between the stud unit 14 and the guide unit 44 can be suppressed to a smaller level.

Moreover, in the case when the sealing unit 46 is located above the guide unit 44, it is possible to suppress the dislocation in the radial direction of the sealing unit 46 relative to the tilt of the small diameter opening unit 40 to a lower level, in comparison with, for example, the structure of Patent Document 1.

Next, the following description will discuss the reason why the fine gap is prepared at the fitting portion of the stud unit 14 and the guide unit 44. When the ball joint 10 is activated, the ball stud 12 carries out rocking and sliding movements on the socket 32. In this case, the rocking movements refer to operations in which the ball stud 12 is tilted around the center point of the ball-head unit 16, and the sliding movements refer to operations in which the ball stud 12 is rotated around the center axis of the stud unit 14.

In the dust cover 36, in order to prevent the film unit 38 of the dust cover 36 from being twisted and damaged due to sliding movements of the ball stud 12 at the time when the small diameter opening unit 40 is attached to the ball stud 12, while the large diameter opening unit 70 is attached to the socket 32, the small diameter opening unit 40 needs to be tightly made in contact with the ball stud 12 so as to be freely slidable thereon.

Therefore, in order to prevent the film unit 38 from being twisted and damaged, it is effective to prepare a gap between the guide unit 44 where the high rigidity reinforcing ring 56 is exposed or closely located and the outer peripheral surface 26 of the shaft unit 22, that is, to form a play in the fitting portion between the guide unit 44 and the stud unit 14.

Additionally, since the sealing unit 46 is deformed by rubber elasticity, the freely slidable property of the small diameter opening unit 40 can be ensured even when the tightening margin is prepared. Moreover, with respect to an arrangement in which the reinforcing ring 56 is placed closely to the guide unit 44 without being exposed, the description thereof will be given in the second embodiment described later.

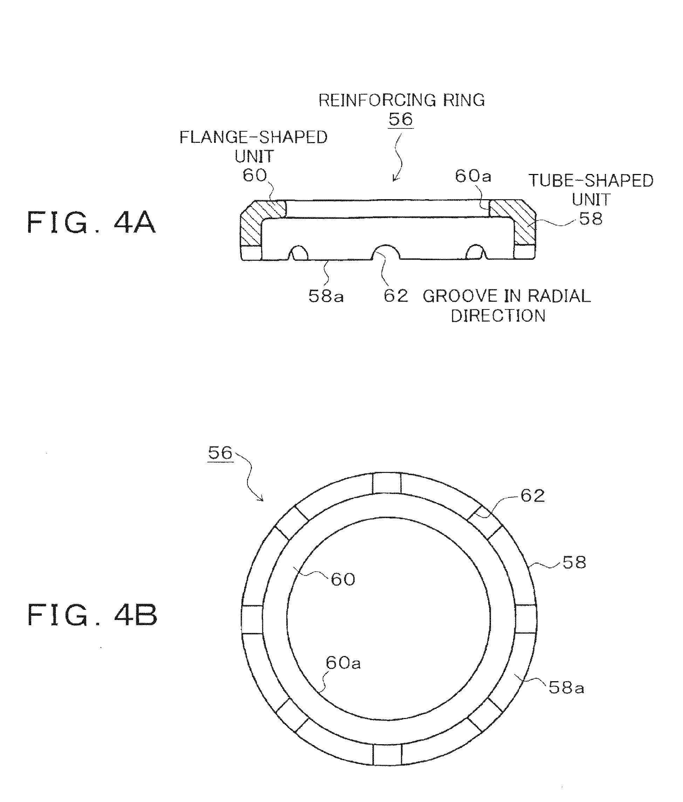

FIGS. 4A and 4B are explanatory views showing the reinforcing ring 56 of FIG. 3 in detail, FIG. 4A is a cross-sectional view of the reinforcing ring 56, and FIG. 4B is a plan view showing the lower side of the reinforcing ring 56. In FIGS. 4A and 4B, the reinforcing ring 56, which is made of, for example, aluminum die-cast, has a structure in which the tube-shaped unit 58 and the flange unit 60 are formed, and on the lower end portion 58a of the tube-shaped unit 58, a plurality of grooves 62 in radial directions, which are used for flowing an elastic material, such as rubber, at the time of molding the dust cover 36, are formed.

When insert-molded as the dust cover 36, the reinforcing ring 56 allows the inner peripheral surface 60a of the flange unit 60 to form the guide unit 44 and the lower end surface 58a in the axial direction of the tube-shaped unit 58 to form the engaging unit 54, and since the reinforcing ring 56 is made of a material such as a resin or metal with rigidity that is sufficiently higher than the material such as rubber to be used for the elastic portion of the dust cover, the guide unit 44 and the engaging unit 54 are coupled to each other with high rigidity.

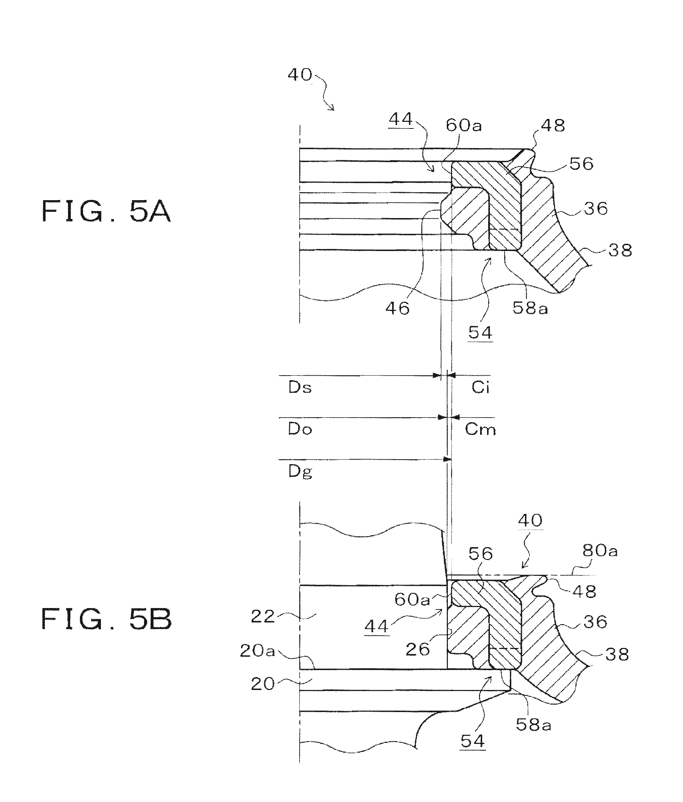

FIG. 5A and FIG. 5B are explanatory views showing a relationship between a fine gap and a tightening margin of the small diameter opening unit 40 of the dust cover 36 in the first embodiment, and FIG. 5A shows the dust cover 36 in an unattached state, and FIG. 5B shows a state in which the small diameter opening unit 40 of the dust cover 36 is attached between the upper surface 20a of the flange unit and the lower surface 80a of the knuckle arm of the ball stud 12, as shown in FIG. 1.

In FIG. 5B, the small diameter opening unit 40 allows the inner peripheral portion 60a of the reinforcing ring 56 that is formed into the guide unit 44 to be fitted to the outer peripheral surface 26 of the shaft unit 22, with a fine gap Cm in the radial direction being placed, and also allows the lower end portion 58a of the reinforcing ring 56 that is formed into the engaging unit 54 to be made in contact with the upper surface 20a of the flange unit and engaged therewith.

In this state, the sealing unit 46 is tightly made in contact with the outer peripheral surface 26 of the shaft unit 22 so that the sealing property of the dust cover 36 is ensured. Moreover, the lip unit 48 is tightly made in contact with the knuckle arm lower surface 80a by elasticity so that the sealing property of the dust cover 36 is reinforced.

In this case, as shown in FIGS. 5A and 5B, supposing that an inner diameter of the sealing unit 46 in an unattached stat is Ds, an outer diameter of the shaft unit 22 (outer peripheral surface 26) is Do and an inner diameter of the guide unit 44 (inner peripheral surface 60a of the reinforcing ring 56) is Dg, an arrangement is made so as to allow relationships between the fine gap Cm and the outer peripheral surface 26 of the guide unit 44 as well as between the tightening margin Ci and the outer peripheral surface 26 of the sealing unit 46 to satisfy the following expressions:

$$Cm = (Dg - Do)/2$$

$$Ci = (Do - Ds)/2$$

$$Ci > Cm.$$

That is, the tightening margin Ci corresponds to a difference between the outer radius (Do/2) of the shaft unit 22 and the inner radius (Ds/2) of the sealing unit 46 in an unattached state, the fine gap Cm corresponds to a difference between the outer radius (Do/2) of the shaft unit 22 and the inner radius (Dg/2) of the guide unit 44, and the tightening margin Ci becomes larger than the fine gap Cm.

The following description will discuss the reason why the tightening margin is made larger than the fine gap. The dislocation in the radial direction of the inner peripheral portion 42 caused by the tilt of the small diameter opening unit 40 is smaller in the sealing unit 46 located below the guide unit 44 than that in the guide unit 44.

By setting the tightening margin Ci of the sealing unit 46 so as to be larger than the amount of the gap (fine gap Cm) in the radial direction of the guide unit 44, even in the case when the small diameter opening unit 40 is tilted until one portion of the inner peripheral surface 60a of the guide unit 44 comes into contact with the outer peripheral surface 26 of the shaft unit 22, the sealing unit 46 is allowed to maintain the state having the tightening margin. Additionally, the tightening margin in the state with the small diameter opening unit 40 being tilted becomes actually smaller than the tightening margin Ci in the initial state.

[Second Embodiment]

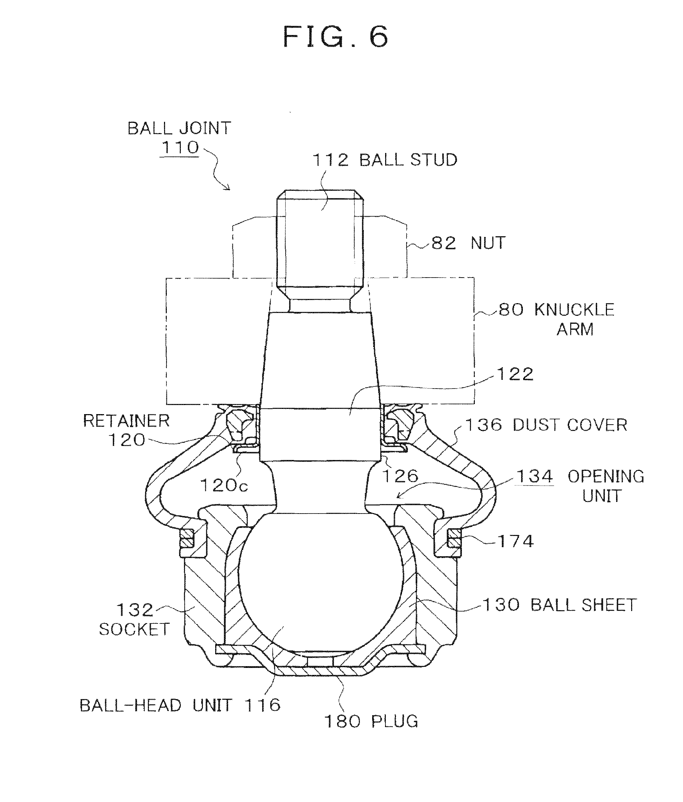

FIG. 6 is an explanatory view showing a structure of a second embodiment of a ball joint in accordance with the present invention. In FIG. 6, a ball joint 110 is constituted by a ball stud 112, a retainer 120, a ball sheet 130, a socket 132, a dust cover 136, a clamp 174 and a plug 180, and is secured onto a knuckle arm 80 serving as an assembling target by a nut 82.

In contrast to the ball stud 12 of the first embodiment in which the flange unit 20 is integrally formed, the ball stud 112 of FIG. 6 has the retainer 120 provided with a flange unit 120c, which is press-inserted onto the outer peripheral surface 126 of a shaft unit 122.

The retainer 120 is installed as a member separated from the ball stud 112; however, since it is secured onto the ball stud 112, the flange unit 120c of the retainer 120 actually serves substantially as the same structural member as the flange unit 20 of the first embodiment, and also has the same functions.

Additionally, by preparing the retainer 120 as the member separated from the ball stud 112, since the retainer 120 can be press-inserted to the ball stud 112 after the ball stud 112 has been assembled into the socket 132, the flange unit 120c having an outer shape larger than the inner diameter of the opening unit 134 of the socket 132 can be prepared.

The ball joint 110 has a structure in which a ball-head unit 116 formed on the lower end of the ball stud 112 is assembled onto the socket 132, with the ball sheet 130 being interposed therebetween, and by closing the plug 180 by a caulk-molding process, the ball stud 112 is supported so as to freely rock and slide therein. Moreover, between the ball stud 112 and the socket 132, the dust cover 136 for use in preventing water and dusts from entering the inside thereof through the opening unit 134 is attached.

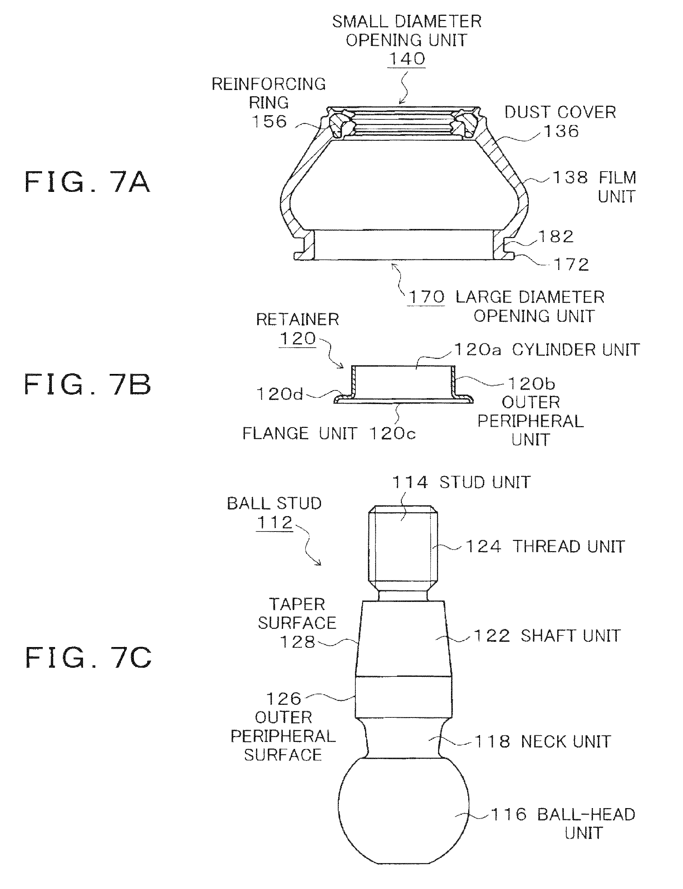

FIGS. 7A, 7B and 7C are explanatory views showing the dust cover 136, the retainer 120 and the ball stud 112 respectively in a separated manner, and FIG. 7A is a cross-sectional view of the dust cover 136, FIG. 7B is a cross-sectional view of the retainer 120 and FIG. 7C shows the ball stud 112.

In FIG. 7A, the dust cover 136 formed by an elastic material, such as rubber, is provided with a small diameter opening unit 140 formed on the upper end of the film unit 138 and a large diameter opening unit 170 formed on the lower end thereof, with a reinforcing ring 156, which is formed by a resin and the like, being embedded into the small diameter opening unit 140, and into the large diameter opening unit 170, a peripheral edge unit 172 provided with a clamp groove 182 to which the clamp 174 is attached is formed.

In FIG. 7B, the retainer 120 forms a cylinder unit 120a and a flange unit 120c, and in a state where the cylinder unit 120a is press-inserted onto the outer peripheral surface 126 of the shaft unit 122 and secured thereto, the flange unit 120c corresponds to the flange unit 20 of the ball stud 12 of the first embodiment.

Moreover, in this case, the outer peripheral surface 120b of the cylinder unit 120a replaces the outer peripheral surface 26 of the shaft unit 22 of the first embodiment, and the upper surface 120d of the flange unit 120c replaces the flange unit upper surface 20a in the first embodiment.

In FIG. 7C, the ball stud 112 has a structure in which a ball-head unit 116 is formed on the lower end of the stud unit 114, and the stud unit 114 has a structure in which a neck unit 118, a shaft unit 122, a thread unit 124 are formed in succession from the ball-head unit 116 side. Moreover, on the shaft unit 122, an outer peripheral surface 126 is formed on the neck unit 118 side and a taper surface 128 is formed on the thread unit 124 side.

In the present embodiment, the peripheral edge unit 172 of the large diameter opening unit 170 is fitted to a groove formed on the outer peripheral upper portion of the socket 132, and a clamp 174 made of metal is fitted to the clamp groove 182 so that the dust cover 136 is secured to the socket 132; however, the attaching method of the dust cover 136 onto the socket 132 side may be carried out by another mode.

Moreover, in the same manner as in the first embodiment, the attaching method of the dust cover 136 onto the ball stud 112 side may be carried out by another securing method as long as the same structure is provided, and the assembling target for the ball joint 110 may be desirably determined.

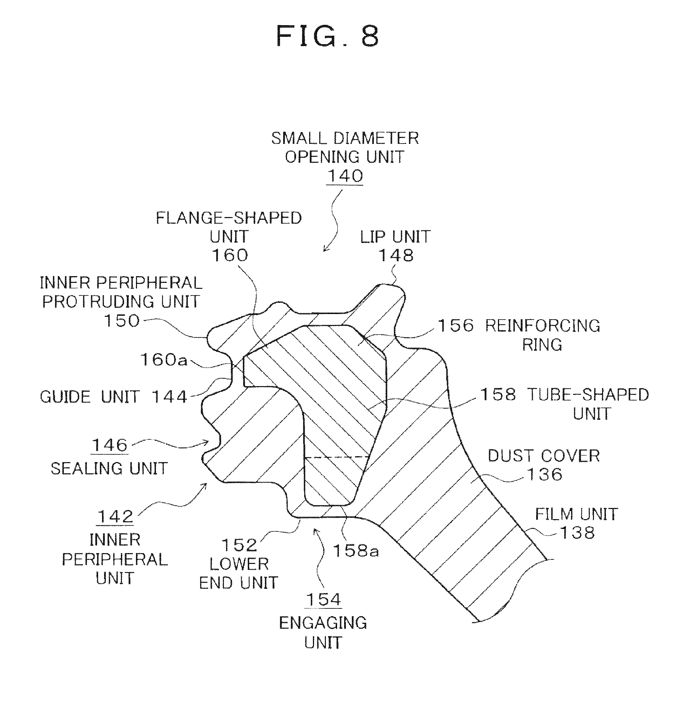

FIG. 8 is a cross-sectional view showing the small diameter opening unit 140 of the dust cover 136 of the second embodiment in an enlarged manner, which corresponds to the portion on the right side of the small diameter opening unit 140 in FIG. 7A that is drawn out and shown. In FIG. 8, the small diameter opening unit 140 has a structure in which a guide unit 144, a sealing unit 146 and an inner peripheral protruding unit 150 are formed on the inner peripheral portion 142 side, and a lip unit 48 is formed on the upper end side, with an engaging unit 154 being formed on a lower end unit 152 side, and the reinforcing ring 156 is embedded inside thereof.

In the present embodiment, a shape with one groove formed therein (shape with two rows of ridges formed thereon) is proposed as the sealing unit 146; however, the shape without the groove shown in the first embodiment or another conventionally known shape may be used, that is, any desired shape may be used for the shape of the sealing unit, as long as the sealing property is not impaired.

A tube-shaped unit 158 and a flange-shaped unit 160 are formed on the reinforcing ring 156, and in the present embodiment, the inner peripheral surface 160a of the flange unit 160 and the lower end surface 158a of the tube-shaped unit 158 are not exposed from an elastic material, such as rubber, that forms the dust cover 136 so that the inner peripheral surface 160a is disposed at a position made face to face with the inner peripheral surface of the guide unit 144 and the lower end surface 158a is disposed at a position made face to face with the engaging unit 154.

Upon insert-molding a component made of a resin or metal onto a product of rubber or the like, because of the reasons for moldability or the like, it sometimes becomes difficult to expose the surface of the insert component, and the present embodiment exemplifies a case in which the inner peripheral surface 160a and the lower end surface 158a of the reinforcing ring 156 are covered with a thin film of an elastic material (material forming a dust cover), such as rubber, with these coated surfaces forming the guide unit 144 and the engaging unit 154.

Additionally, the thickness of the coating film may be desirably determined depending on molding conditions and designing conditions; however, in order to enhance the coupling rigidity of the guide unit 144 and the engaging unit 154, the thinner, the better. Moreover, for the coupling rigidity, the reinforcing ring is more desirably exposed.

The guide unit 144 is fitted to the outer peripheral surface 126 of the shaft unit 122, with a fine gap being formed in the radial direction, and the engaging unit 154 is made in contact with the flange unit upper surface 120d of the retainer 120 in the axial direction and engaged therewith. The sealing unit 146 is made tightly in contact with the outer peripheral surface 126 of the shaft unit 122 by a tightening margin in the radial direction so that the sealing property of the small diameter opening unit 140 is maintained.

A lip unit 148 is made tightly in contact with the lower surface of the knuckle arm 80 by elasticity so that the sealing property of the small diameter opening unit 140 is reinforced; however, the presence or absence of the setting of the lip unit 148 may be desirably determined in the same manner as in the first embodiment. Moreover, by forming the inner peripheral protruding unit 150 having elasticity, it becomes possible to increase a force that resists the small diameter opening unit 140 against tilting, while maintaining the freely sliding property of the small diameter opening unit 140 relative to the stud unit 114.

In the case when the inner peripheral protruding unit 150 is formed, even if the force by which the small diameter opening unit 140 is pulled by the film unit 138 is equivalent to that of the structure with no inner peripheral protruding unit 150 formed thereon, since the tilt angle of the small diameter opening unit 140 is suppressed to a smaller angle, the sealing endurance of the dust cover 136 can be improved.

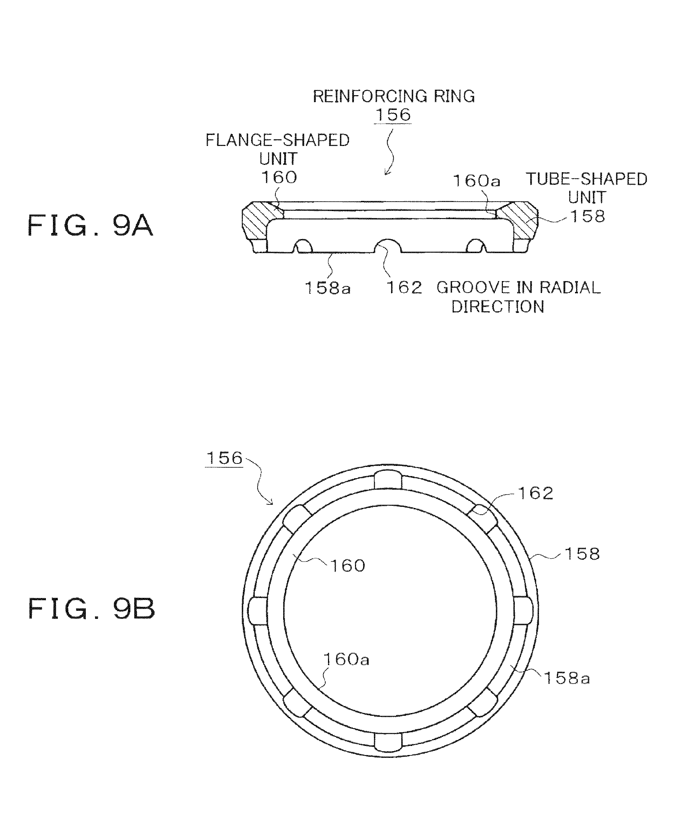

FIG. 9A and FIG. 9B are explanatory views that show the reinforcing ring 156 of FIG. 8 in detail, FIG. 9A shows a cross section of the reinforcing ring 156, and FIG. 9B shows a lower-side plan view of the reinforcing ring 156. In FIGS. 9A and 9B, the reinforcing ring 156 has a structure in which the tube-shaped unit 158 and the flange-shaped unit 160 are formed by, for example, plastic molding, and a plurality of grooves 162 in radial directions are formed on the lower end surface 158a of the tube-shaped unit 158 so as to allow an elastic material such as rubber to flow therethrough upon molding the dust cover 136.

The reinforcing ring 156 is designed such that when insert-molded as the dust cover 136, the inner peripheral surface 160a of the flange-shaped unit 160 is disposed at a position made face to face to the inner peripheral surface of the guide unit 144 and the lower end surface 158a in the axial direction of the tube-shaped unit 158 is also disposed at a position made face to face with the engaging unit 154 so that since the reinforcing ring 156 is made of a material such as resin or metal having a sufficiently higher rigidity than that of a material such as rubber used for the elastic portion of the dust cover, the guide unit 144 and the engaging unit 154 are coupled to each other with high rigidity.

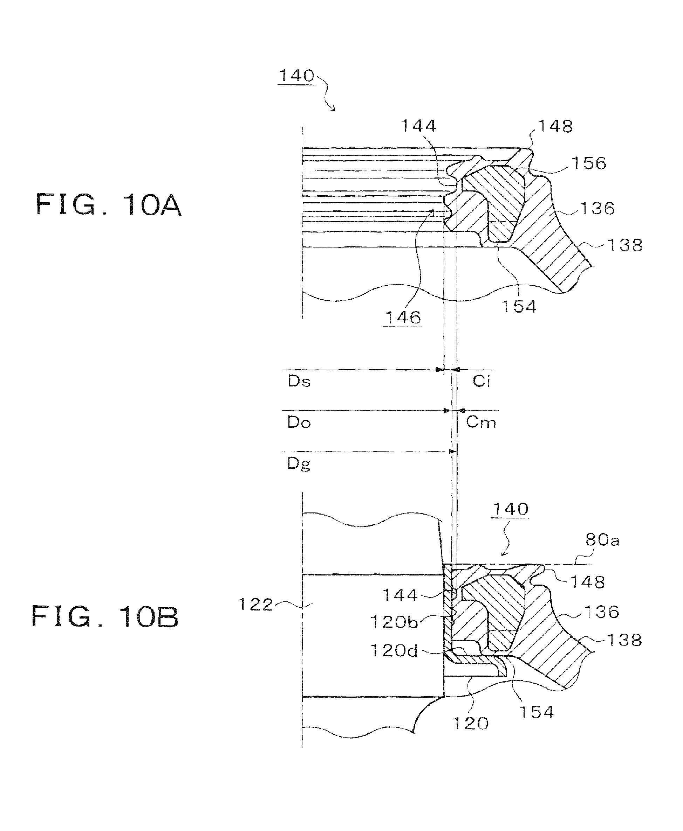

FIGS. 10A and 10B are explanatory views showing a relationship between the fine gap and the tightening margin of the small diameter opening unit 140 of the dust cover 136 in the second embodiment, FIG. 10A shows an unattached state of the dust cover 136, and FIG. 10B shows a state in which, as shown in FIG. 6, the small diameter opening unit 140 of the dust cover 136 is attached between the flange-unit upper surface 120d of the retainer 120 and the knuckle-arm lower surface 80a.

In FIG. 10B, the small diameter opening unit 140 is designed such that, inside thereof, the guide unit 144 with which the inner peripheral surface 160a of the reinforcing ring 156 faces is fitted to the outer peripheral surface 120b of the retainer 120, with a fine gap Cm being placed in the radial direction, and the engaging unit 154 with which the lower end surface 158a of the reinforcing ring 156 faces is made in contact with the retainer flange-unit upper surface 120d and engaged therewith.

In this state, the sealing unit 146 is made tightly in contact with the outer peripheral surface 120b of the retainer 120 so that the sealing property of the dust cover 136 is ensured. Moreover, the lip unit 148 is made tightly in contact with the knuckle-arm lower surface 80a by elasticity so that the sealing property of the dust cover 136 is reinforced.

In this case, as shown in FIGS. 10A and 10B, supposing that an inner diameter of the sealing unit 146 in an unattached state is Ds, an outer diameter (outer diameter of the shaft unit) of the retainer outer peripheral surface 120b is Do and an inner diameter of the guide unit 144 is Dg, a structure is made so as to allow relationships between the fine gap Cm and the outer peripheral surface 120b of the guide unit 144 as well as between the tightening margin Ci and the outer peripheral surface 120b of the sealing unit 146 to satisfy the following expressions:

$$Cm = (Dg - Do)/2$$

$$Ci = (Do - Ds)/2$$

$$Ci > Cm.$$

That is, the tightening margin Ci corresponds to a difference between the outer radius (Do/2) of the retainer outer peripheral surface 120b and the inner radius (Ds/2) of the sealing unit 146 in an unattached state, and the fine gap Cm corresponds to a difference between the outer radius (Do/2) of the retainer outer peripheral surface 120b and the inner radius (Dg/2) of the guide unit 144, and the tightening margin Ci becomes larger than the fine gap Cm.

[Third Embodiment]

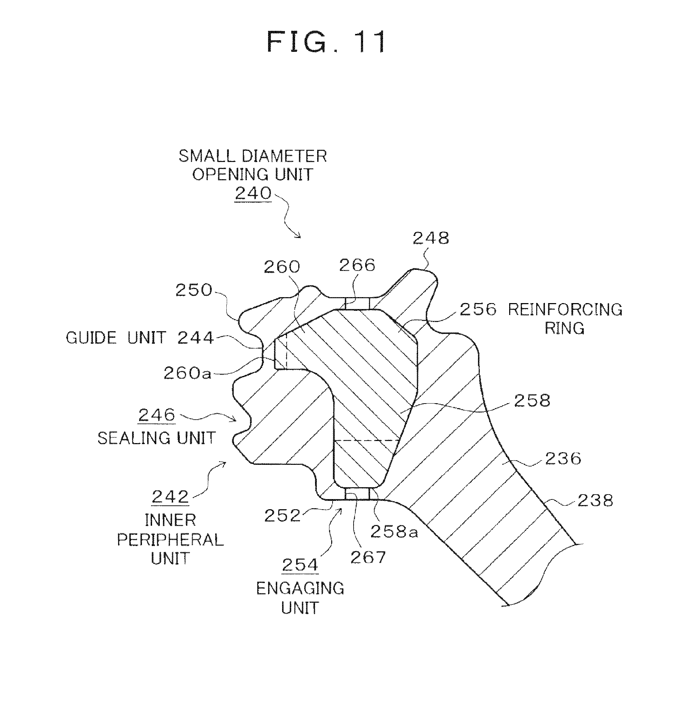

FIG. 11 is a cross-sectional view showing a small diameter opening unit of a dust cover of a third embodiment in an enlarged manner, and this structure is the same as that of the dust cover 136 of the second embodiment shown in FIG. 8 except that one portion of each of the shapes of the reinforcing ring and the dust cover main body is different.

In FIG. 11, a small diameter opening unit 240 of a dust cover 236 has a structure in which a guide unit 244, a sealing unit 246 and an inner peripheral protruding unit 250 are formed on the inner peripheral portion 242 side, and a lip unit 248 is formed on the upper end side and an engaging unit 254 is formed on the lower end unit 252 side, with a reinforcing ring 256 formed with a resin or the like being embedded inside thereof.

The reinforcing ring 256 has a tube-shaped unit 258 and a flange-shaped unit 260 formed thereon, and in the present embodiment, the inner peripheral surface 260a of the flange-shaped unit 260 and the lower end surface 258a of the tube-shaped unit 258 are not exposed from an elastic material such as rubber, forming the dust cover 236, and an inner peripheral surface 260a is disposed at a position facing the inner peripheral surface of the guide unit 244, and a lower end surface 258a is disposed at a position facing the engaging unit 254.

Moreover, there are remaining traces of positioning pins for use in holding the reinforcing ring 256 inside a mold at the time of molding the dust cover 236 on the main body of the dust cover 236 as a plurality of pin holes 266 and 267 in the longitudinal direction of the reinforcing ring 256; therefore, the lower end surface 258a of the tube-shaped unit 258 is exposed from the elastic material such as rubber at portions corresponding to these pin holes 267; however, these pin holes 267 are not particularly required from the functional point of view.

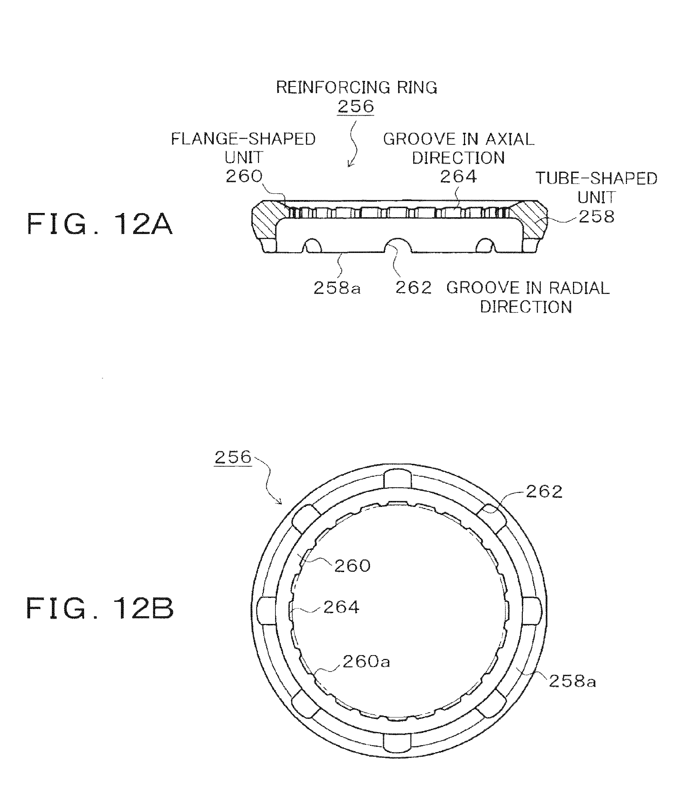

FIGS. 12A and 12B are explanatory views showing the reinforcing ring 256 of FIG. 11 in detail, FIG. 12A shows a cross section of the reinforcing ring 256, and FIG. 12B shows a lower side plane of the reinforcing ring 256. In FIGS. 12A and 12B, the reinforcing ring 256 has a structure in which the tube-shaped unit 258 and the flange-shaped unit 260 are formed by, for example, plastic molding, and on the lower end portion 258a of the tube-shaped unit 258 and the inner peripheral surface 260a of the flange-shaped unit 260, a plurality of radial-direction grooves 262 and axial-direction grooves 264 for use in flowing the elastic material such as rubber upon molding the dust cover 236 are formed.

By forming grooves not only on the lower end portion 258a of the tube-shaped unit 258, but also on the inner peripheral surface 260a of the flange-shaped unit 260, upon molding the dust cover 236 with the reinforcing ring 256 being inserted therein, it is possible to ensure flow paths for use in filling the elastic material such as rubber around the reinforcing ring 256, and also to make the inner peripheral surface 260a (portions without forming grooves) of the reinforcing ring 256 facing the guide unit 244 placed more closely to the inner peripheral surface of the guide unit 244.

Therefore, even in the case when a thin film of an elastic material such as rubber is required between the inner peripheral surface of the guide unit 244 and the inner peripheral surface 260a of the reinforcing ring 256, due to conditions or the like of the moldability of the dust cover 236, it becomes possible to enhance the rigidity of the guide unit, and also to ensure good sealing property of the dust cover.

The shape, the size and the number of the grooves (radial-direction grooves 262 and axial-direction grooves 264) of the reinforcing ring 256 may be desirably set within a range not intervening with the flow of the elastic material such as rubber at the time of molding the dust cover 236, and these are not limited by the mode shown in FIG. 12. These are also applied to the other embodiments in the same manner.

[Fourth Embodiment]

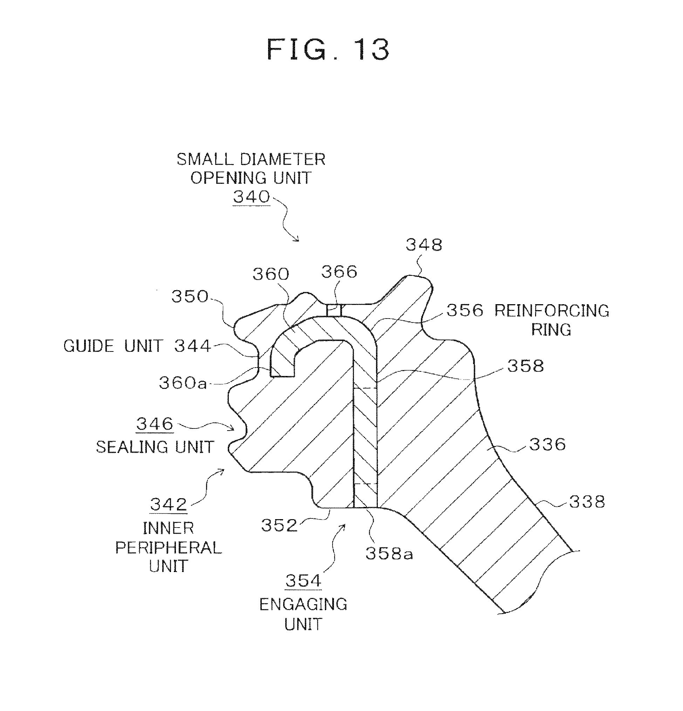

FIG. 13 is a cross-sectional view showing a small diameter opening unit of a fourth embodiment of a dust cover in an enlarged manner, and the structure is the same as the dust cover 136 of the second embodiment shown in FIG. 8, except that the shape of one portion of each of the reinforcing ring and the dust cover main body is different.

In FIG. 13, a small diameter opening unit 340 of a dust cover 336 has a structure in which a guide unit 344, a sealing unit 346 and an inner peripheral protruding unit 350 are formed on the inner peripheral portion 342 side, and a lip unit 348 is formed on the upper end side, with an engaging unit 354 being formed on a lower end unit 352 side, and a reinforcing ring 356 formed by press working of a sheet metal is embedded inside thereof.

A tube-shaped unit 358 and a flange-shaped unit 360 are formed on the reinforcing ring 356, and in the present embodiment, the lower end surface 358a of the tube-shaped unit 358 is exposed from an elastic material, such as rubber, that forms the dust cover 336 so that an engaging unit 354 is formed, and the inner peripheral surface 360a of the flange-shaped unit 360 is not exposed and is disposed at a position facing the inner peripheral surface of the guide unit 344.

Moreover, on the main body of the dust cover 336, there are remaining traces of positioning pins for use in holding the reinforcing ring 356 inside a mold at the time of molding the dust cover 336 as a plurality of pin holes 366 in the upper direction of the reinforcing ring 356; however, these pin holes 366 are not particularly required from the functional point of view.

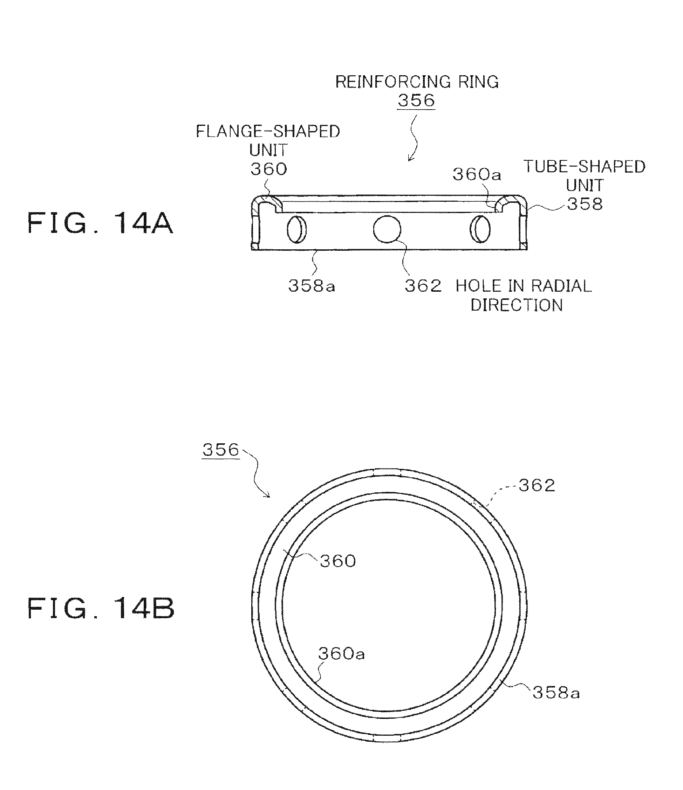

FIGS. 14A and 14B are explanatory views showing the reinforcing ring 356 of FIG. 13 in detail, FIG. 14A shows a cross section of the reinforcing ring 356, and FIG. 14B shows a lower side plane of the reinforcing ring 356. In FIGS. 14A and 14B, the reinforcing ring 356 has a structure in which the tube-shaped unit 358 and the flange-shaped unit 360 are formed by press working of a sheet metal, and on the tube-shaped unit 358, a plurality of radial-direction holes 362 for use in flowing an elastic material such as rubber at the time of molding the dust cover 336 are formed.

[Fifth Embodiment]

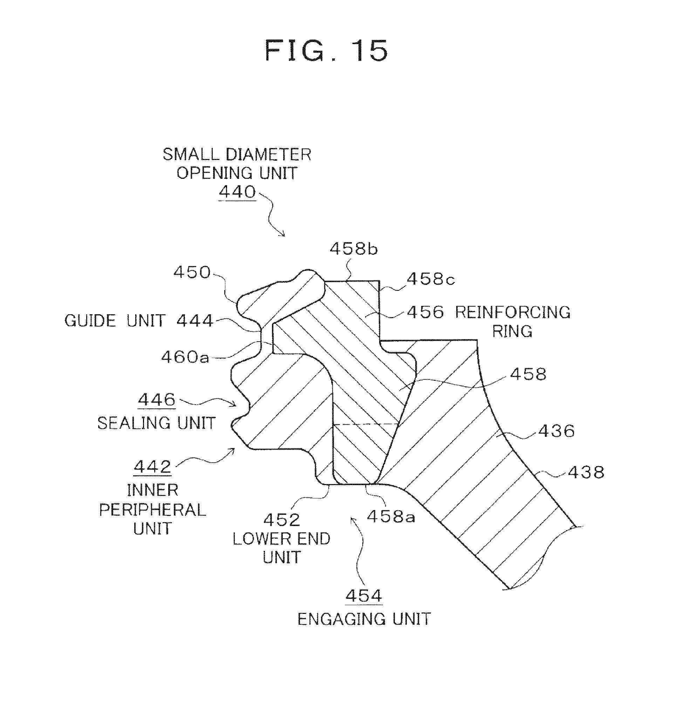

FIG. 15 is a cross-sectional view showing a small diameter opening unit of a dust cover of a fifth embodiment in an enlarged manner, and the structure is the same as the dust cover 136 of the second embodiment shown in FIG. 8, except that the shape of one portion of each of the reinforcing ring and the dust cover main body is different.

In FIG. 15, a small diameter opening unit 440 of a dust cover 436 has a structure in which a guide unit 444, a sealing unit 446 and an inner peripheral protruding unit 450 are formed on the inner peripheral portion 442 side, and an engaging unit 454 is formed on a lower end unit 452 side, and a reinforcing ring 456 made of metal or a resin is embedded inside thereof.

A tube-shaped unit 458 and a flange-shaped unit 460 are formed on the reinforcing ring 456, and in the present embodiment, the lower end surface 458a of the tube-shaped unit 458 is exposed from an elastic material, such as rubber, that forms the dust cover 436 so that an engaging unit 454 is formed, and the inner peripheral surface 460a of the flange-shaped unit 460 is not exposed and is disposed at a position facing the inner peripheral surface of the guide unit 444.

Moreover, in the reinforcing ring 456, the upper end surface 458b and the upper outer peripheral surface 458c of the tube-shaped unit 458 are exposed, and the upper outer peripheral surface 458c forms a positioning unit for holding the reinforcing ring 456 inside the mold at the time of molding the dust cover 436.

The positioning method for the reinforcing ring at the time of molding the dust cover main body, with the reinforcing ring being inserted therein, may be desirably determined depending on conditions at the time of the molding process, and in addition to the method of the present embodiment in which the upper outer peripheral surface 458c of the tube-shaped unit 458 is exposed and utilized for the positioning process, for example, as shown in FIG. 11, a conventionally known method, such as the use of positioning pins disposed on the mold, may be applied.

Not limited to a ball joint for use as a coupling device in a vehicle-use link mechanism, the present invention is also applicable to all kinds of ball joints provided with a dust cover, and not limited to the above-mentioned embodiments, modifications may be made therein on demand within a range without impairing its objects and advantages.

Explanations of Reference Numerals

    10, 110: ball joint
    12, 112: ball stud
    14, 114: stud unit
    16, 116: ball-head unit
    18, 118: neck unit
    20: flange unit
    22, 122: shaft unit
    24, 124: thread unit
    26, 126: outer peripheral surface
    28, 128: taper surface
    30, 130: ball sheet
    32, 132: socket
    34, 134: opening unit
    36, 136, 236, 336, 436: dust cover
    38, 138, 238, 338, 438: film unit
    40, 140, 240, 340, 440: small diameter opening unit
    42, 142, 242, 342, 442: inner peripheral portion
    44, 144, 244, 344, 444: guide unit
    46, 146, 246, 346, 446: sealing unit
    48, 148, 248, 348: lip unit
    52, 152, 252, 352, 452: lower end unit
    54, 154, 254, 354, 454: engaging unit
    56, 156, 256, 356, 456: reinforcing ring
    58, 158, 258, 358, 458: tube-shaped unit
    60, 160, 260, 360, 460: flange-shaped unit
    62, 162, 262: radial-direction groove
    70, 170: large diameter opening unit
    72, 172: peripheral edge unit
    74: press-in ring
    80: knuckle arm
    82: nut
    120: retainer
    150, 250, 350, 450: inner peripheral protruding unit
    174: clamp
    180: plug
    182: clamp groove
    264: axial-direction groove

266, 267, 366: pin hole
362: radial-direction hole

**Claims**

1.  A ball joint comprising:

    a ball stud having a ball-head unit formed on a lower end of a stud unit;
    a socket that houses the ball-head unit so as to be pivotable therein, and has an opening unit from which the stud unit protrudes, formed on an upper end thereof; and
    a dust cover having elasticity, which is provided with a small diameter opening unit to which the stud unit is attached and a large diameter opening unit to which the socket is attached,
    wherein the ball stud has a flange unit formed on the stud unit, and the dust cover further comprises a guide unit formed on the inner peripheral portion of the small diameter opening unit, which is fitted to the outer peripheral portion of the stud unit, with a fine gap being placed in a radial direction; an engaging unit formed on a lower end portion of the small diameter opening unit, which is made in contact with an upper surface of the flange unit in the axial direction, and engaged therewith; and a reinforcing ring that couples the guide unit and the engaging unit with each other with high rigidity.

2.  The ball joint according to claim 1, wherein the dust cover is provided with a sealing unit formed on a lower side of the guide unit on the inner peripheral portion of the small diameter opening unit, which is tightly made in contact with the outer peripheral portion of the stud unit by a tightening margin in an axial direction.

3.  The ball joint according to claim 2, wherein the dust cover has a difference between an outer radius of the stud unit and an inner radius of the sealing unit in an unattached state as the tightening margin, and a difference between the outer radius of the stud unit and an inner radius of the guide unit as the fine gap, and
    wherein the tightening margin is larger than the fine gap.

4.  The ball joint according to any one of claims 1 to 3, wherein the dust cover is provided with an inner peripheral protruding unit that is formed on an inner peripheral portion of the small diameter opening unit above the guide unit, and protrudes inward from the inner peripheral surface of the guide unit.

5.  The ball joint according to any one of claims 1 to 4, wherein the reinforcing ring further comprises: a tube-shaped unit with a lower end in an axial direction being made face to face with the engaging unit; a flange unit that is formed on an inner side of an upper end of the tube-shaped unit, with the inner peripheral surface thereof being made face to face with the guide unit; and a communication groove formed on the inner peripheral surface of the flange unit in a longitudinal direction.

# FIG. 1

BALL JOINT
10

12 BALL STUD

82 NUT

80 KNUCKLE ARM

36 DUST COVER

34 OPENING UNIT

74

30 BALL SHEET

16 BALL-HEAD UNIT

32 SOCKET

SMALL DIAMETER
OPENING UNIT
40

REINFORCING
RING
56

DUST COVER
36

**FIG. 2A**

38 FILM UNIT

72

74

70
LARGE DIAMETER
OPENING UNIT

BALL STUD
12

14 STUD UNIT

24 THREAD UNIT

TAPER
SURFACE
28

**FIG. 2B**

22 SHAFT UNIT

20 FLANGE UNIT

26
OUTER
PERIPHERAL
SURFACE

18 NECK UNIT

16 BALL-HEAD UNIT

# FIG. 3

SMALL DIAMETER
OPENING UNIT
40

FLANGE-SHAPED
UNIT
60

48 LIP UNIT

GUIDE UNIT
44

56 REINFORCING RING

60a

SEALING
UNIT
46

58 TUBE-SHAPED
UNIT

36 DUST COVER

42
INNER
PERIPHERAL
UNIT

38 FILM UNIT

52
LOWER END
UNIT

58a

54
ENGAGING UNIT

FIG. 4A

REINFORCING RING
56

FLANGE-SHAPED
UNIT
60

60a

TUBE-SHAPED
UNIT
58

58a  62  GROOVE IN RADIAL
DIRECTION

FIG. 4B

56

62

58

60

60a

58a

FIG. 5A

FIG. 5B

# FIG. 6

BALL JOINT
110

112 BALL STUD

82 NUT

80 KNUCKLE ARM

122

RETAINER
120

136 DUST COVER

120c

126

134 OPENING UNIT

174

132 SOCKET

130 BALL SHEET

BALL-HEAD UNIT 116

180 PLUG

SMALL DIAMETER
OPENING UNIT
140

REINFORCING
RING
156

DUST COVER
136

138 FILM
UNIT

182
172

170 LARGE DIAMETER
OPENING UNIT

FIG. 7A

RETAINER
120

120a CYLINDER UNIT

120d

120b
OUTER
PERIPHERAL
UNIT

FLANGE UNIT 120c

FIG. 7B

114 STUD UNIT

BALL STUD
112

124 THREAD UNIT

TAPER
SURFACE
128

122 SHAFT UNIT

126
OUTER
PERIPHERAL
SURFACE

118 NECK UNIT

116 BALL-HEAD
UNIT

FIG. 7C

# FIG. 8

SMALL DIAMETER
OPENING UNIT
140

FLANGE-SHAPED
UNIT
160

LIP UNIT
148

INNER PERIPHERAL
PROTRUDING UNIT
150

156 REINFORCING
RING

160a

GUIDE UNIT 144

158 TUBE-SHAPED
UNIT

146
SEALING UNIT

DUST COVER
136

142
INNER
PERIPHERAL
UNIT

FILM UNIT
138

152
LOWER
END UNIT

158a

154
ENGAGING
UNIT

FIG. 9A

REINFORCING RING
156

FLANGE-SHAPED
UNIT
160

160a   TUBE-SHAPED
UNIT
158

158a   162   GROOVE IN RADIAL
DIRECTION

FIG. 9B

156

162

160

158

160a

158a

FIG. 10A

FIG. 10B

# FIG. 11

SMALL DIAMETER
OPENING UNIT
240

248

260    266

250

GUIDE UNIT 244

256 REINFORCING
RING

260a

246
SEALING UNIT

258

236

242
INNER
PERIPHERAL
UNIT

252

258a

238

254
ENGAGING
UNIT

267

REINFORCING RING
256

FLANGE-SHAPED
UNIT
260

GROOVE IN AXIAL
DIRECTION
264

TUBE-SHAPED
UNIT
258

FIG. 12A

258a          262   GROOVE IN RADIAL
DIRECTION

256

262

260

264

260a

258a

FIG. 12B

# FIG. 13

SMALL DIAMETER
OPENING UNIT
340

348

360    366

350

356 REINFORCING
RING

GUIDE UNIT 344

360a

358

346
SEALING UNIT

336

342
INNER
PERIPHERAL
UNIT

352

338

358a

354
ENGAGING
UNIT

FIG. 14A

REINFORCING RING
356

FLANGE-SHAPED
UNIT
360

360a

TUBE-SHAPED
UNIT
358

358a

362  HOLE IN RADIAL
DIRECTION

FIG. 14B

356

362

360

360a

358a

# FIG. 15

SMALL DIAMETER
OPENING UNIT
440

458b

450

458c

GUIDE UNIT 444

456 REINFORCING
RING

460a

458

446

436

SEALING UNIT

438

442

INNER
PERIPHERAL
UNIT

452
LOWER END
UNIT

458a

454
ENGAGING UNIT

**INTERNATIONAL SEARCH REPORT**

International application No.

PCT/JP2013/065003

A.   CLASSIFICATION OF SUBJECT MATTER
*F16C11/06*(2006.01)i

According to International Patent Classification (IPC) or to both national classification and IPC

B.   FIELDS SEARCHED

Minimum documentation searched (classification system followed by classification symbols)
F16C11/06

Documentation searched other than minimum documentation to the extent that such documents are included in the fields searched
| Jitsuyo Shinan Koho | 1922-1996 | Jitsuyo Shinan Toroku Koho | 1996-2013 |
| Kokai Jitsuyo Shinan Koho | 1971-2013 | Toroku Jitsuyo Shinan Koho | 1994-2013 |

Electronic data base consulted during the international search (name of data base and, where practicable, search terms used)

C.   DOCUMENTS CONSIDERED TO BE RELEVANT

| Category* | Citation of document, with indication, where appropriate, of the relevant passages | Relevant to claim No. |
|---|---|---|
| X<br>Y | JP 2009-24834 A   (NOK Corp.),<br>05 February 2009 (05.02.2009),<br>paragraphs [0016] to [0019]; fig. 3 to 4<br>(Family: none) | 1-4<br>5 |
| X | Microfilm of the specification and drawings annexed to the request of Japanese Utility Model Application No. 59946/1985(Laid-open No. 175667/1986)<br>(Toyoda Gosei Co., Ltd.),<br>01 November 1986 (01.11.1986),<br>fig. 1 to 3<br>(Family: none) | 1-3 |

☒   Further documents are listed in the continuation of Box C.      ☐   See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered   to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 20 August, 2013 (20.08.13) | 03 September, 2013 (03.09.13) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

International application No.

PCT/JP2013/065003

C (Continuation).    DOCUMENTS CONSIDERED TO BE RELEVANT

| Category* | Citation of document, with indication, where appropriate, of the relevant passages | Relevant to claim No. |
|---|---|---|
| Y | WO 2008/044624 A1  (NOK Corp.),<br>17 April 2008 (17.04.2008),<br>paragraphs [0034], [0039]<br>& JP 4868185 B          & US 2010/0194059 A1<br>& EP 2080941 A1 | 5 |
| Y | JP 2009-14064 A  (NOK Corp.),<br>22 January 2009 (22.01.2009),<br>fig. 2<br>& EP 2012028 A2 | 5 |
| Y | JP 2009-14171 A  (NOK Corp.),<br>22 January 2009 (22.01.2009),<br>paragraphs [0016] to [0018]; fig. 3<br>(Family: none) | 5 |

Form PCT/ISA/210 (continuation of second sheet) (July 2009)

**EP 2 881 602 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2009014064 A